# EUROPEAN PATENT APPLICATION

(11) **EP 4 664 094 A1**
(43) Date of publication of application: **17.12.2025**
(21) Application number: 24891691.8
(22) Date of filing: 04.11.2024
(51) Int. Cl.: G01N 21/25, G01N 21/27, H01M 4/04

(54) **DEVICE FOR TESTING DRYNESS OF ELECTRODE AND METHOD FOR TESTING DRYNESS OF ELECTRODE**

(30) Priority: 16.11.2023 KR 20230159514
(71) Applicant: LG Energy Solution, Ltd., Seoul 07335 (KR)
(72) Inventor: LEE, Sung Ho, Daejeon 34122 (KR); LEE, Junghyoung, Daejeon 34122 (KR); CHOI, Hyeon, Daejeon 34122 (KR); LEE, Heejeong, Daejeon 34122 (KR)
(74) Representative: Plasseraud IP
(86) International application number: PCT/KR2024/017118
(87) International publication number: WO 2025/105744

(57) **Abstract**

A device for testing the dryness of an electrode according to the present disclosure comprises: an electrode substrate in which an electrode slurry is applied onto a collector, a standard sample, a light emitting unit that includes a light source and a bifurcated optical fiber connected to the light source, and selectively irradiates light to any one of the electrode substrate and the standard sample through one optical fiber of the bifurcated optical fiber, a light receiving unit that includes a spectrometer that selectively receives light reflected from any one of the electrode substrate and the standard sample and analyzes the reflected light, and a control unit that corrects at least one of the light source and the spectrometer based on the analysis results of the spectrometer.

## Description

### [TECHNICAL FIELD]

### Cross-Reference to Related Application(s)

This application claims priority to and the benefit of Korean Patent Application No. 10-2023-0159514, filed on November 16, 2023, with the Korean Intellectual Property Office, the disclosure of which is incorporated herein by reference in its entirety.

The present disclosure relates to a device for testing a dryness of electrode and a method for testing a dryness of electrode, and more particularly, to a device for testing dryness of electrode and a method for testing dryness of electrode that can check and correct the dryness of electrode on an in-line basis during an electrode drying process.

### [BACKGROUND]

As technologies for mobile devices are developed, and demand for the mobile devices increases, there has been a rapid increase in demand for secondary batteries as energy sources. In particularly, secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer, and a wearable device.

A secondary battery is manufactured by incorporating an electrode assembly together with an electrolyte in a secondary battery case, wherein the electrode assembly is prepared by stacking and/or winding a positive electrode, a separator, and negative electrode.

At this time, electrodes such as a positive electrode and an negative electrode are produced by mixing materials such as an active material, a conductive material, and a binder with a solvent to prepare a slurry, then applying the slurry to a current collector and drying it. Here, the drying is performed by passing the electrode through a large number of drying zones, and in order to evaluate the degree of dryness of each electrode, a measurement method utilizing the reflectance of the electrode was used.

Meanwhile, the light source and spectrometer in the reflectance measuring device of the electrode have a limited lifetime, and the light quantity and measurement performance may deteriorate over time, and it is essential to periodically check and correct this.

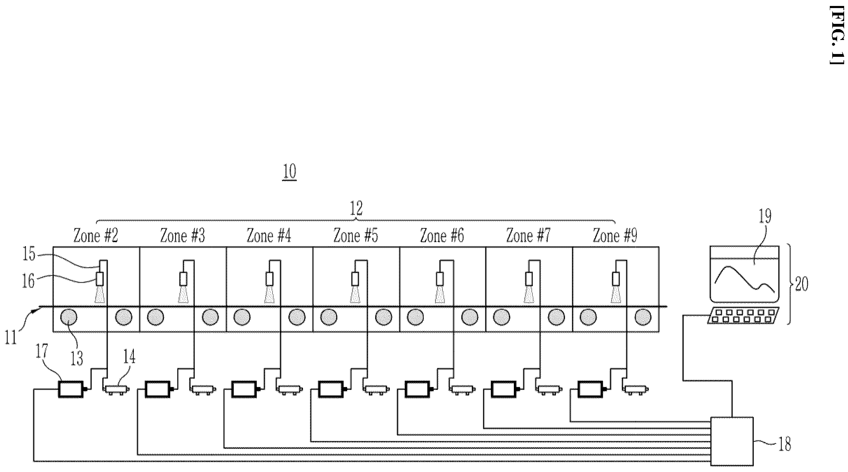

FIG. 1 is a schematic diagram of a conventional electrode dryness testing device.

Referring to FIG. 1, a conventional electrode dryness testing device 10 includes: a transfer unit 13 that transfers an electrode substrate 11 to an electrode drying zone 12, an optical fiber 15 and a collimator lens 16 for irradiating light from a light source 14 to the electrode substrate 11, a spectrometer 17 for analyzing a reflected light reflected from the electrode substrate 11, a spectrometer hub 18 connected to the spectrometer 17, and a control unit 20 that includes a display device 19 showing the analysis results of the spectrometer 17.

In order to irradiate light from a light source to the electrode substrate 11, an optical fiber 15 and a collimator lens 16 are located at an upper part of the electrode substrate 11, and light is irradiated vertically to measure the reflectance with a spectrometer 17. The standard sample is located in the same environment as the electrode substrate 11, i.e., in a drying oven. That is, conventionally, a drying process in progress was stopped for correction work, and a person has directly measured the reflectance of the standard sample placed in the drying oven. In this case, there was a problem that loss occurred because the drying process was stopped, and there was a possibility of the occurrence of a safety accident while a person is directly entering the high-temperature drying oven.

Therefore, in order to solve these problems, there is a need to develop a device and method that can locate the standard sample outside the drying oven and measure the reflectance of the standard sample independently of the drying process of the electrode substrate 11.

### [DETAILED DESCRIPTION OF THE INVENTION]

### [Technical Problem]

The present disclosure is designed to solve the above-mentioned problems, and it is possible to locate a standard sample outside the drying oven and measure a reflectance of the standard sample independently of the drying process of the electrode substrate. Thereby, an object of the present disclosure is to provide a device for testing the dryness of electrode and a method for testing the dryness of electrode that can correct the reflectance measurement device in real time.

### [Technical Solution]

According to the present disclosure, there is provided a device for testing the dryness of an electrode, the device comprising: an electrode substrate in which an electrode slurry is applied onto a collector; a standard sample; a light emitting unit that includes a light source and a bifurcated optical fiber connected to the light source, and selectively irradiates light to any one of the electrode substrate and the standard sample through one optical fiber of the bifurcated optical fiber; a light receiving unit that includes a spectrometer that selectively receives light reflected from any one of the electrode substrate and the standard sample and analyzes the reflected light; and a control unit that corrects at least one of the light source and the spectrometer based on the analysis results of the spectrometer.

In one embodiment, the light receiving unit includes a multiplexer and may selectively receive the reflected light of any one of the electrode substrate and the standard sample.

In one embodiment, the light emitting unit may further include a collimator lens connected to the bifurcated optical fiber, and the collimator lens converts the light into parallel light.

In one embodiment, the collimator lens may have a diameter of 5 mm or more and 50 mm or less, and may be spaced away from the electrode substrate or the standard sample by 30 mm or more and 100 mm or less.

In one embodiment, the collimator lens may be coated with an anti-reflection material.

In one embodiment, the light source may emit light of 680 nm or more and 1050 nm or less.

In one embodiment, the standard sample may have a reflectance of 98% or more.

In one embodiment, the bifurcated optical fiber may have an average diameter of 200*µ*m or more and 800*µ*m or less.

According to the present disclosure, there is provided a method for testing the dryness of an electrode, comprising the steps of: a monitoring step that irradiating light to an electrode substrate through the one optical fiber of bifurcated optical fiber and analyzing a first reflected light reflected from the surface of the electrode substrate to monitor the dryness of the electrode substrate; and a correcting step that irradiating light to a standard sample through the other optical fiber of the bifurcated optical fiber and analyzing a second reflected light reflected from the surface of the standard sample to correct at least one of the light source and the spectrometer.

In one embodiment, the correcting step may further consider, in addition to the analysis result of the second reflected light, an analysis results of noise light measured in a state where no light is provided from the light source.

In one embodiment, the correcting step may be periodically performed during the progress of the monitoring step.

### [Advantageous Effects]

A device for testing the dryness of an electrode according to the present disclosure can check the reflectance of a standard sample on an in-line basis during the drying process and calibrate the reflectance measuring device.

Therefore, the device for testing the dryness of an electrode according to the present disclosure can reliably test the reflectance of the electrode.

### [BRIEF DESCRIPTION OF THE DRAWING]

FIG. 1 is a schematic diagram of a conventional electrode dryness testing device.
FIG. 2 is a schematic diagram of an electrode dryness testing device according to one embodiment.
FIG. 3 is a schematic diagram of a part of the electrode dryness testing device of FIG. 2.
FIG. 4 is a schematic diagram of a part of the electrode dryness testing device of FIG. 2.
FIG. 5 is a schematic diagram of a part of the electrode dryness testing device of FIG. 2.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

In addition, when a layer, film, region, plate or the like is disposed "on" or "at the top of" a specific part, the description includes not only a case where the layer, film, region, plate or the like is disposed "directly on" the specific part, but also a case where other part is disposed therebetween. When a part is disposed "directly on" another part, this indicates that there is no other part therebetween. Further, when a part is disposed "on" or "at the top of" a reference part, this indicates that the part is present at the top of or under the reference part, and does not necessarily indicate that the part is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

The terms used herein are provided to describe exemplary embodiments but are not intended to limit the inventive concept. The singular forms include plural forms unless the context clearly indicates otherwise.

According to an embodiment of the present disclosure, there is provided a device for testing the dryness of an electrode, the device comprising:
an electrode substrate in which an electrode slurry is applied onto a collector;
a standard sample;
a light emitting unit that includes a light source and a bifurcated optical fiber connected to the light source, and selectively irradiates light to any one of the electrode substrate and the standard sample through one optical fiber of the bifurcated optical fiber;
a light receiving unit that includes a spectrometer that selectively receives light reflected from any one of the electrode substrate and the standard sample and analyzes the reflected light; and
a control unit that corrects at least one of the light source and the spectrometer based on the analysis results of the spectrometer.

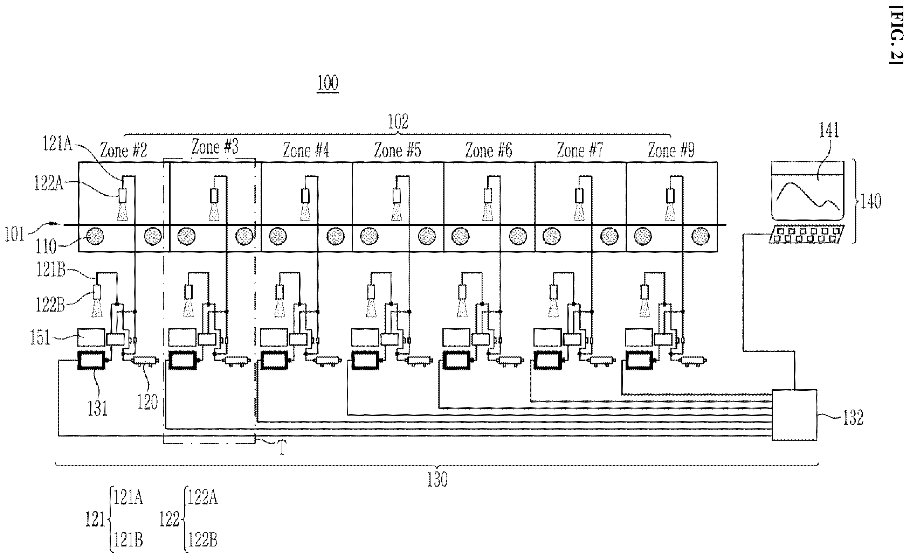

Now, an electrode dryness testing device of the present disclosure will be described with reference to FIGS. 2 to 4.

FIG. 2 is a schematic diagram of an electrode dryness testing device according to one embodiment.

Referring to FIG. 2, the electrode dryness testing device 100 includes an electrode substrate 101 to be dried, a light source 120, a bifurcated optical fiber 121, a spectrometer 131, a control unit 140, and a standard sample 151.

The electrode substrate 101 is a substrate on which an electrode slurry is applied and coated onto a current collector. The electrode slurry of one embodiment can be prepared by mixing an active material, a binder, and optionally a conductive material in an organic solvent. The mixed electrode slurry can be coated onto a current collector and dried to form an electrode mixture layer, thereby producing an electrode of a positive electrode or an negative electrode. As the electrode current collector, copper can be used for an negative electrode, and aluminum can be mainly used for a positive electrode.

The active material may be a positive electrode active material or an negative electrode active material. As the positive electrode active material, a compound capable of reversible intercalation and deintercalation of lithium and known in the art can be used without limitation. Specifically, the positive electrode active material may be a lithium composite metal oxide including one or more metals such as cobalt, manganese, nickel, or aluminum with lithium.

The binder is used to assist in binding between the active material and the conductive material, and in binding to the current collector. Non-limiting examples of the binder include polyvinylidene fluoride(PVDF), polyvinyl alcohol(PVA), polyacrylic acid(PAA), poly(methacrylic acid)(PMA), poly(methylmethacrylate)(PMMA), polyacrylamide(PAM), poly(methacrylamide)(PMMA), polyacrylamide(PAM), polymethacrylamide, polyacrylonitrile(PAN), polymethacrylonitrile, polyimide(PI), alginic acid, alginate, chitosan, carboxymethyl cellulose(CMC), starch, hydroxypropyl cellulose, regenerated cellulose, polyvinylpyrrolidone, tetrafluoroethylene, polyethylene, polypropylene, an ethylene-propylene-diene polymer(EPDM), sulfonated-EPDM, styrene-butadiene rubber(SBR), fluorine rubber, and various copolymers thereof.

The conductive material is used to further improve conductivity of the electrode active material. The conductive material is not particularly limited as long as it has electrical conductivity without causing a chemical change in the battery. Examples of the conductive material include graphite such as natural graphite or artificial graphite; carbon blacks such as carbon black, acetylene black, ketjen black, channel black, furnace black, lamp black, and thermal black; conductive fibers such as a carbon fiber and a metallic fiber; metallic powders such as carbon fluoride powder, aluminum powder, and nickel powder; conductive whiskers such as zinc oxide and potassium titanate; conductive metal oxides such as titanium oxide; polyphenylene derivatives; and the like.

In this specification, the electrode substrate 101 is in a state where an electrode slurry is applied onto a current collector, and can pass through the electrode dryness testing device 100 of the present disclosure to perform a drying process. In the drying process, the solvent component of the slurry is removed, and it is important to be dried to an appropriate degree to improve battery properties. If the drying is not sufficient, there may be a problem that the solvent is not sufficiently removed, and if it is excessively dried, the drying quality of the slurry may be deteriorated.

The electrode substrate 101 passes sequentially through a drying zone 102 by a transfer part 110. A plurality of drying zones 102 may be provided along the transfer direction of the electrode substrate 101. FIG. 2 shows that in one example, nine drying zones 102 are provided as zones #2 to #9. In each drying zone 102, the electrode substrate 101 is located in a drying oven, and the drying oven may have a temperature of up to 150 degrees Celsius. Each drying zone 102 is provided with a light receiving unit and a light emitting unit described below, so that the degree of drying can be determined each time the electrode substrate 101 passes through the drying zone 102.

Further, the electrode substrate 101 is sequentially dried while passing through a large number of drying zones. For example, the electrode substrate 101 may be dried in five stages: a wet state, a state in which the surface is dried, a state in which surface drying is completed, a state in which the inside is dried, and a state in which drying is completed up to the inside.

Meanwhile, the electrode dryness testing device 100 includes a standard sample 151 that is disposed independently from the electrode substrate 101. Specifically, the standard sample 151 is located outside the drying oven and is disposed independently from the electrode substrate 101. For example, the standard sample 151 may be located in a dark box configured in the same environment as the drying oven.

The standard sample 151 may have a reflectance of 98% or more. That is, a white standard reflectance can be provided for the standard sample 151. Specifically, the standard sample 151 may have a reflectance of 98% or more for light of 880 nm or more and 980 nm or less. The standard sample 151 may have a PTFE (polytetrafluoroethylene) material.

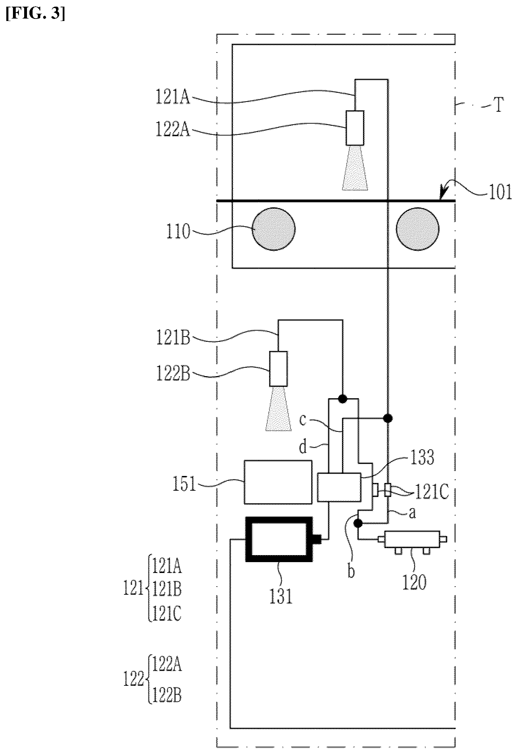

The electrode dryness testing device 100 includes a light source 120 and a light emitting unit including a bifurcated optical fiber 121 connected to the light source 120. The following description will be given with reference to FIG. 3.

FIG. 3 is a schematic diagram of a part of the electrode dryness testing device of FIG. 2. Specifically, FIG. 3 is an enlarged view of the region T of FIG. 2.

Referring to FIGS. 2 and 3 together, the light from the light source 120 may have a wavelength of 680 nm or more and 1050 nm or less. The wavelength is a wavelength corresponding to near infrared rays, and more preferably, it may have a wavelength of 880 nm or more and 980 nm or less. The power of the light source varies depending on the device, and may have a power of 5 W to 200 W by way of example. It is preferable that the lifetime is 2000 hours or more. For example, a halogen lamp of 4.5 W or more may be used as the light source 120. However, the type, power, and wavelength of the light source of the present disclosure are not limited to those described above.

The bifurcated optical fiber 121 may include a first optical fiber 121A directed toward the electrode substrate 101 through a channel a, and a second optical fiber 121B directed toward the standard sample 151 through a channel b. A fiber connector 121C may be disposed between the channel a and the first optical fiber 121A, and between the channel b and the second optical fiber 121B, respectively. The electrode dryness testing device 100 may selectively irradiate light to any one of the electrode substrate 101 and the standard sample 151 through the bifurcated optical fiber 121. Specifically, the light source 120 is placed in a room temperature environment, and the bifurcated optical fiber 121 may selectively irradiate light to the electrode substrate 101 and the standard sample 151 located in a high temperature oven box or a dark box. The first optical fiber 121A and the second optical fiber 121B may distribute the light of the light source 120 in a ratio of 1:9 to 9:1, and preferably in a ratio of 5:5.

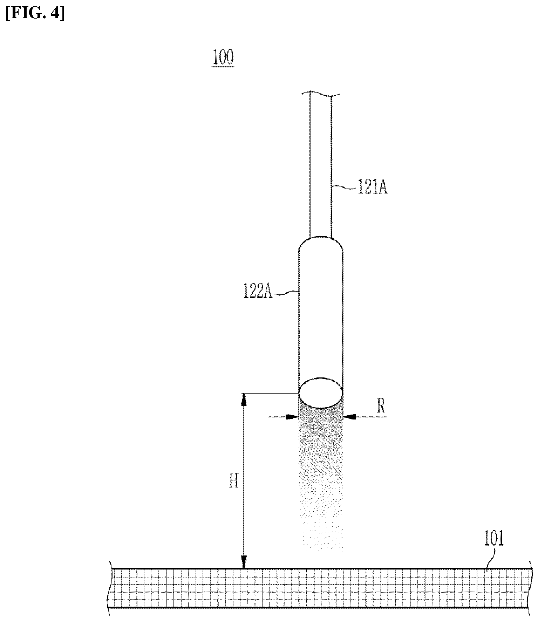

Further, the light emitting unit may further include a collimator lens 122. The collimator lens 122 is located at one end of the bifurcated optical fiber 121, and may convert light spreading from the light source 120 into parallel light. Accordingly, light may be concentratedly irradiated to an irradiation target spaced away from the bifurcated optical fiber 121 and the collimator lens 122. The collimator lens 122 may include a first collimator lens 122A located at one end of the first optical fiber 121A and a second collimator lens 122B located at one end of the second optical fiber 121B. The first collimator lens 122A is located on the electrode substrate 101, and the second collimator lens 122B is located on the standard sample 151. The irradiation of light through the bifurcated optical fiber 121 and the collimator lens 122 will be described in more detail with reference to FIG. 4,

FIG. 4 is a schematic diagram of a part of the electrode dryness testing device of FIG. 2. Specifically, this is an enlarged schematic diagram of the first optical fiber 121A, the first collimator lens 122A, and the electrode substrate 101 in the electrode dryness testing device 100.

Referring to FIG. 4, the electrode dryness testing device 100 of one embodiment may utilize regular reflection. Accordingly, the first collimator lens 122A irradiates light perpendicularly to the surface of the electrode substrate 101 based on the transport direction of the electrode substrate 101. The first collimator lens 122A may have a separation distance H in a vertical direction to the electrode substrate 101. The separation distance H may be 30 mm or more and 100 mm or less, specifically 30 mm or more and 80 mm or less, more specifically 40 mm or more and 60 mm or less, and most preferably 50 mm. If the separation distance H is too close and outside the above range, physical interference with the electrode substrate 101 being processed may occur, resulting in problems such as damage, and if the separation distance is too far, the light irradiation range may become wider, making it difficult to accurately irradiate the target to be irradiated, which is not preferable.

The diameter R of the first collimator lens 122A may be 5 mm or more and 50 mm or less, more specifically 10 mm or more and 40 mm or less, and more specifically 10 mm or more and 20 mm or less. If the diameter R is smaller than the above range, the light quantity is small, making it difficult to accurately measure the reflectance of the electrode, and if the diameter is larger, the irradiation range of the light source may become too wide, which is not preferable.

Further, the first collimator lens 122A may be coated with an anti-reflection material. Thereby, the reflectance of the first collimator lens 122A may be an average of 0.5% or less.

The first optical fiber 121A that irradiates light through the first collimator lens 122A may have an average diameter of 200 *µ*m or more and 800 *µ*m or less, more specifically, 400 *µ*m or more and 800 *µ*m or less, and more specifically, 400 *µ*m or more and 600 *µ*m or less. If the average diameter is small and outside the above range, the light quantity may be too small to measure reflectance, and if the average diameter is too large, production and efficiency may pose a problem.

Meanwhile, the above-mentioned description may be similarly applied to the relationship between the second optical fiber 121B, the second collimator lens 122B, and the standard sample 151.

Referring again to FIGS. 2 and 3, the electrode dryness testing device 100 includes a light receiving unit 130 including a spectrometer 131 and a spectrometer hub 132. The spectrometer 131 selectively receives and analyzes a reflected light reflected from any one of the electrode substrate 101 and the standard sample 151. For example, the spectrometer 131 may analyze the intensity or spectrum of the reflected light. The spectrometer hub 132 transmits the analysis results obtained from the spectrometers 131 of the drying zone 102 to the control unit 140.

The light receiving unit 130 includes a multiplexer 133 connected to the spectrometer 131, and can selectively receive a reflected light reflected from any one of the electrode substrate 101 and the standard sample 151. The multiplexer 133 can be replaced with a TTL switch, and the following description of the multiplexer 133 can be similarly applied to a TTL switch.

The light receiving unit 130 can receive light reflected from the surface of the electrode substrate 101 through the channel c of the multiplexer 133, or can receive light reflected from the surface of the standard sample 151 through the channel d of the multiplexer 133.

The spectrometer 131 can analyze a reflected light of the electrode substrate 101 or the standard sample 151 that has passed through the multiplexer 133.

On the other hand, in another embodiment of the present disclosure, the bifurcated optical fiber 121 included in the light emitting unit and the multiplexer 133 included in the light receiving unit 130 may be replaced with one multiplexer.

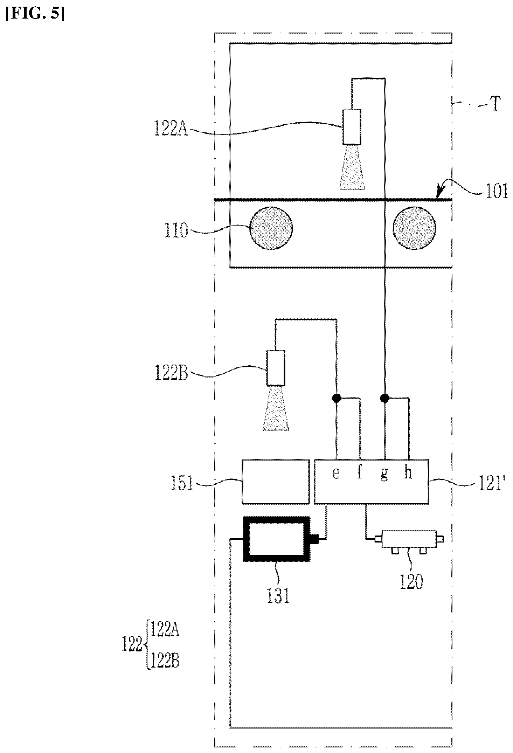

FIG. 5 is a schematic diagram of a part of the electrode dryness testing device of FIG. 2.

Referring to FIG. 5, the bifurcated optical fiber 121 and the multiplexer 133 described in FIG. 3 may be replaced with one multiplexer 121'. The multiplexer 121' includes channels e, f, g, and h, and may play the role of the bifurcated optical fiber 121 and the multiplexer 133 of FIG. 3.

Specifically, the light source 120 may irradiate light to the electrode substrate 101 through the channel g and the first collimator lens 122A. The light reflected from the electrode substrate 101 may be transmitted to the spectrometer 131 through the channel h. Further, the light source 120 may irradiate light to the standard sample 151 through the channel e and the second collimator lens 122B. The light reflected from the standard sample 151 may be transmitted to the spectrometer 131 through the channel f.

The control unit 140 includes a display device 141 connected to the spectrometer hub 132. The display device 141 displays data values obtained from the spectrometer hub 132, and the control unit 140 corrects at least one of the light source 120 and the spectrometer 131 based on the analysis results of the spectrometer 131. The correction may be performed, for example, by adjusting the intensity of the light source 120 or correcting the analysis results of the spectrometer 131. The correction is described in detail in the electrode dryness testing method described below.

According to another embodiment of the present disclosure, a method for testing the dryness of an electrode using the above-mentioned electrode dryness testing device is provided.

According to an embodiment of the present disclosure, there is provided a method for testing the dryness of an electrode, comprising the steps of:
a monitoring step that irradiating light to an electrode substrate through the one optical fiber of the bifurcated optical fiber and analyzing a first reflected light reflected from the surface of the electrode substrate to monitor the dryness of the electrode substrate; and
a correcting step that irradiating light to a standard sample through the other optical fiber of the bifurcated optical fiber and analyzing a second reflected light reflected from the surface of the standard sample to correct at least one of the light source and the spectrometer.

Next, the electrode dryness inspection method of the present disclosure will be described with reference to FIGS. 2 to 4. Meanwhile, the description of the above-described components of the electrode dryness testing device 10 is similarly applied below.

The monitoring step of the dryness of the electrode substrate is a step of irradiating the surface of the electrode substrate 101 with light from a light source 120 through a first optical fiber 121A and a first collimator lens 122A, and then analyzing the first reflected light, which is light reflected from the surface of the electrode substrate 101. That is, the monitoring step of the dryness of the electrode substrate is a step of irradiating and analyzing light on the electrode substrate 101 by the light emitting unit and the light receiving unit 130 of the electrode dryness testing device 10 and displaying the result value on the display device 141.

The correcting step includes a step of irradiating the surface of the standard sample 151 with light from the light source 120 through the second optical fiber 121B and the second collimator lens 122B, and then analyzing the second reflected light, which is light reflected from the surface of the standard sample 151. That is, in order to confirm the necessity of correction, the light is irradiated and analyzed on the standard sample 151 from the light emitting unit and the light receiving unit 130 of the electrode dryness testing device 10.

At this time, in addition to the analysis result of the second reflected light, an analysis result of noise light measured in a state where no light is provided from the light source 120 is further taken into consideration. Specifically, the noise light means the light of the surrounding environment rather than the light source, and may be, for example, a fluorescent lamp. For accurate correction, the correcting step also takes into consideration the analysis result by the noise light in a state where no light source is provided.

In this way, in the correcting step, at least one of the light source 120 and the spectrometer 131 is corrected by taking into consideration the analysis result of the second reflected light and the analysis result of the noise light. For example, at least one of the light quantity of the light source 120 and the analysis result of the spectrometer 131 can be corrected as needed.

Further, since the correcting step can proceed independently of the monitoring step, since it is possible to check whether correction is necessary through the external standard sample 151 without stopping the drying process of the electrode substrate 101. Therefore, the correcting step can be performed periodically during the progress of the monitoring step.

Therefore, the electrode dryness testing device and the electrode dryness testing method of the present disclosure can locate the standard sample outside the drying oven and measure the reflectance of the standard sample independently of the drying process of the electrode substrate. Thereby, the electrode dryness testing device and method capable of correcting the reflectance measurement device in real time are provided, enabling reliable testing of the electrode dryness.

While the embodiments of the present disclosure have been described in detail, the technical scope of the present disclosure is not limited to the embodiments, and also includes various modifications and improvements made by one of ordinary skill in the art using the concepts defined in the claims attached therewith.

## Claims

1. A device for testing the dryness of an electrode, the device comprising:
an electrode substrate in which an electrode slurry is applied onto a collector;
a standard sample;
a light emitting unit that includes a light source and a bifurcated optical fiber connected to the light source, and selectively irradiates light to any one of the electrode substrate and the standard sample through one optical fiber of the bifurcated optical fiber;
a light receiving unit that includes a spectrometer that selectively receives light reflected from any one of the electrode substrate and the standard sample and analyzes the reflected light; and
a control unit that corrects at least one of the light source and the spectrometer based on the analysis results of the spectrometer.

2. The device for testing the dryness of an electrode according to claim 1,
wherein the light receiving unit includes a multiplexer, and selectively receives the reflected light of any one of the electrode substrate and the standard sample.

3. The device for testing the dryness of an electrode according to claim 1,
wherein the light emitting unit further includes a collimator lens connected to the bifurcated optical fiber, and the collimator lens converts the light into parallel light.

4. The device for testing the dryness of an electrode according to claim 3,
wherein the collimator lens has a diameter of 5 mm or more and 50 mm or less, and is spaced away from the electrode substrate or the standard sample by 30 mm or more and 100 mm or less.

5. The device for testing the dryness of an electrode according to claim 3,
wherein the collimator lens is coated with an anti-reflection material.

6. The device for testing the dryness of an electrode according to claim 1,
wherein the light source emits light of 680 nm or more and 1050 nm or less.

7. The device for testing the dryness of an electrode according to claim 1,
wherein the standard sample has a reflectance of 98% or more.

8. The device for testing the dryness of an electrode according to claim 1,
wherein the bifurcated optical fiber has an average diameter of 200*µ*m or more and 800*µ*m or less.

9. A method for testing the dryness of an electrode, comprising the steps of:
a monitoring step that irradiating light to an electrode substrate through the one optical fiber of the bifurcated optical fiber according to claim 1 and analyzing a first reflected light reflected from the surface of the electrode substrate to monitor the dryness of the electrode substrate; and
a correcting step that irradiating light to a standard sample through the other optical fiber of the bifurcated optical fiber according to claim 1, and analyzing a second reflected light reflected from the surface of the standard sample to correct at least one of the light source and the spectrometer.

10. The method for testing the dryness of an electrode according to claim 9,
wherein the correcting step further considers, in addition to the analysis result of the second reflected light, an analysis results of noise light measured in a state where no light is provided from the light source.

11. The method for testing the dryness of an electrode according to claim 9,
wherein the correcting step is periodically performed during the progress of the monitoring step.
